# EUROPEAN PATENT SPECIFICATION

(11) **EP 4 450 160 B1**
(45) Date of publication and mention of the grant of the patent: **18.02.2026**
(21) Application number: 22920578.6
(22) Date of filing: 20.12.2022
(51) Int. Cl.: B01J 29/74, B01D 53/94, F01N 3/08, F01N 3/10, F01N 3/22, F01N 3/28

(54) **CATALYZER FOR PURIFYING EXHAUST GAS OF GASOLINE ENGINE, AND EXHAUST GAS PURIFICATION SYSTEM USING SAME**
KATALYSATOR ZUR REINIGUNG VON ABGAS EINES BENZINMOTORS UND ABGASREINIGUNGSSYSTEM DAMIT
CATALYSEUR DE PURIFICATION DE GAZ D'ÉCHAPPEMENT DE MOTEUR À ESSENCE, ET SYSTÈME DE PURIFICATION DE GAZ D'ÉCHAPPEMENT L'UTILISANT

(30) Priority: 13.01.2022 JP 2022003831
(43) Date of publication of application: 23.10.2024
(73) Proprietor: CATALER CORPORATION, Kakegawa-shi, Shizuoka 437-1492 (JP)
(72) Inventor: OGAWA, Ryoichi, Kakegawa-shi, Shizuoka 437-1492 (JP); OHASHI, Tatsuya, Kakegawa-shi, Shizuoka 437-1492 (JP); ONOHARA, Yu, Kakegawa-shi, Shizuoka 437-1492 (JP)
(74) Representative: Kramer Barske Schmidtchen Patentanwälte PartG mbB
(86) International application number: PCT/JP2022/046960
(87) International publication number: WO 2023/136060

(56) References cited:
- JP-A- 2020 182 898
- JP-A- 2020 510 518
- JP-A- 2020 510 519
- JP-A- 2021 520 995
- US-A1- 2019 143 311
- US-A1- 2019 358 615
- US-A1- 2020 384 449
- US-A1- 2021 102 486

## Description

### Technical Field

The present invention relates to a catalyst body for purifying exhaust gas of gasoline engine. The present invention also relates to an exhaust gas purification system for gasoline engine, using the catalyst body. The present application is based upon and claims the benefit of priority from Japanese patent application No. 2022-003831 filed on January 13, 2022.

### Background Art

The exhaust gas exhausted from gasoline engine such as an automobile engine contains harmful components such as hydrocarbon (HC), carbon monoxide (CO), and nitrogen oxide (NOx). In order to efficiently remove these harmful components from the exhaust gas by chemical reaction, an exhaust gas purification catalyst has been conventionally used.

In recent years, emission regulations have been increasingly tightened, and it is desired to reduce emission of NH₃ from gasoline engine vehicles. NH₃ is a component that can be generated by the over-reduction of NOx by the exhaust gas purifying catalyst. For NH₃ removal, selective catalytic reduction (SCR) technology using zeolite with NH₃ adsorption capacity is known in the diesel engine and lean-burn engine fields (see, for example, JP 2018-187631 A and JP H5-195756 A). As a zeolite with NH₃ adsorption capacity, copper-carrying, chabazite-type zeolite (Cu-CHA) is often used, as used in Examples of JP 2018-187631 A.

In the gasoline engine field, the use of zeolite as an exhaust gas purification catalyst body is known (see, for example, JP H8-173815 A).

US 2019/0358615 A1, US 2020/0384449 A1, US 2019/0143311 A1, and US 2021/0102486 A1 disclose further catalysts.

### Summary of Invention

### Technical Problem

As a result of earnest studies, the present inventors have found as follows. When zeolite such as Cu-CHA is used as the NH₃ adsorbent to reduce NH₃ emission from gasoline engine vehicles, the NH₃ purifying performance after endurance was insufficient for the stricter emission regulations of recent years.

The present invention was made in view of the circumstances described above, and is intended to provide a catalyst body for purifying exhaust gas of gasoline engine, with higher NH₃ purifying performance after endurance.

### Solution to Problem

The catalyst body for purifying exhaust gas (hereinafter also merely referred to as the "exhaust gas purification catalyst body) of gasoline engine, disclosed herein is configured to be placed in an exhaust path of the gasoline engine. The exhaust gas purification catalyst body includes the features specified in claim 1.

For completion of the exhaust gas purification catalyst body for gasoline engine, disclosed herein, the present inventors have found as follows. In the gasoline engine, the temperature range in use environment of the exhaust gas purification catalyst body is typically about 350°C to about 600°C, which is high. In temperature programmed desorption-mass spectrometry (TPD) of Cu-CHA which is an NH₃ adsorbent which has been commonly used, a desorption peak of NH₃ species by physical adsorption was observed at about 200°C, a desorption peak of NH₃ species adsorbed at Lewis acid site was observed at about 350°C, and a desorption peak of NH₃ species adsorbed at Bronsted acid site was observed at about 550°C. The adsorption site of the Lewis acid site is an ion-exchanged site in zeolite. Thus, in zeolite carrying a metal such as Cu, the adsorption intensity of NH₃ in the adsorption site of the Lewis acid site becomes weak. Thus, in the temperature range exceeding about 350°C, zeolite carrying a metal such as Cu cannot sufficiently retain the adsorbed NH₃.

In addition, in gasoline engine, the atmosphere fluctuates between the rich and lean atmospheres. Thus, the metal such as Cu carried on zeolite may elute according to the fluctuation of the atmosphere at high temperatures, causing structural degradation of the zeolite, a decrease in activity of the catalyst noble metal, and the like.

In the exhaust gas purification catalyst body for gasoline engine, disclosed herein, proton-type zeolite having a basic skeleton substantially consisting of 4-, 6-, and 8 membered rings is used as an adsorbent of the NH₃ adsorption layer. This can increase the adsorption intensity of NH₃ at the adsorption site of the Lewis acid site, and can exhibit NH₃ adsorption capacity suitable for the temperature range under an environment where the exhaust gas purification catalyst body in gasoline engine is used. Specifically, the basic skeleton substantially consists of 4-, 6-, and 8 membered rings, thereby effectively exhibiting NH₃ adsorption capacity. Further, the cationic species of the zeolite is proton, thereby solving the problem of the metal elution. In addition, the NH₃ adsorption layer is located closer to the base material than the catalyst layer, thereby efficiently removing NH₃. As a result, according to the exhaust gas purification catalyst body for gasoline engine, disclosed herein, NH₃ purifying performance after endurance is enhanced.

In a preferred aspect of the exhaust gas purification catalyst body for gasoline engine, disclosed herein, the proton-type zeolite is CHA-type zeolite or AFX-type zeolite. The CHA-type zeolite or the AFX-type zeolite is particularly suitable and advantageous for the exhaust gas purification catalyst body.

In a preferred aspect of the exhaust gas purification catalyst body for gasoline engine, disclosed herein, the catalyst layer contains Rh as the catalyst noble metal and at least one of Pd or Pt. With such a configuration, the catalytic performance of the exhaust gas purification catalyst body is particularly high.

In a preferred aspect of the exhaust gas purification catalyst body for gasoline engine, disclosed herein, the catalyst layer has a multilayer structure including a first layer on a surface part side and a second layer on a base material layer side, and the first layer contains Rh as the catalyst noble metal, and the second layer contains Pd as the catalyst noble metal. With such a configuration, the exhaust gas purification system with particularly high NH₃ purifying performance after endurance can be provided.

In another aspect, the exhaust gas purification system for gasoline engine is configured to be placed in an exhaust path for the gasoline engine. The exhaust gas purification system includes: an upstream catalyst converter containing a first catalyst body; and a downstream catalyst converter containing a second catalyst body. The first catalyst body contains a catalyst noble metal, and the second catalyst body is the above-described exhaust gas purification catalyst body. With such a configuration, the exhaust gas purification system with particularly high NH₃ purifying performance after endurance can be provided.

### BRIEF DESCRIPTION OF DRAWINGS

[Fig. 1] Fig. 1 is a schematic view of an exhaust gas purification system according to a first embodiment.
[Fig. 2] Fig. 2 is a schematic perspective view of a second catalyst body used in the exhaust gas purification system according to the first embodiment.
[Fig. 3] Fig. 3 is a partial cross-sectional view of an example of the second catalyst body of Fig. 2, cut in a cylinder axis direction.
[Fig. 4] Fig. 4 is a partial cross-sectional view of another example of the second catalyst body of Fig. 2, cut in a cylinder axis direction.
[Fig. 5] Fig. 5 is a schematic partial cross-sectional view of a lamination structure of a first catalyst body used in the exhaust gas purification system according to the first embodiment.
[Fig. 6] Fig. 6 is a schematic view of an exhaust gas purification system according to a second embodiment.
[Fig. 7] Fig. 7 is a schematic view of an exhaust gas purification system according to a third embodiment.
[Fig. 8] Fig. 8 is a schematic view of an exhaust gas purification system according to a fourth embodiment.
[Fig. 9] Fig. 9 is a schematic view of an exhaust gas purification system according to a fifth embodiment.
[Fig. 10] Fig. 10 is a schematic view of an exhaust gas purification system according to a sixth embodiment.
[Fig. 11] Fig. 11 is a schematic view of an exhaust gas purification system according to a seventh embodiment.
[Fig. 12] Fig. 12 is a schematic view of an exhaust gas purification system according to an eighth embodiment.
[Fig. 13] Figs. 13A to 13G are schematic views of layer structures of second catalyst bodies of exhaust gas purification systems of Examples and Comparative Examples.
[Fig. 14] Fig. 14 is a graph showing NH₃ emissions after endurance of the exhaust gas purification systems of Examples and Comparative Examples.

### DESCRIPTION OF EMBODIMENTS

Some preferred embodiments of the present invention will be described below with reference to the accompanying drawings. The matters which are not specifically mentioned in the present specification and are necessary for implementation of the present invention can be understood as design matters of those skilled in the art based on the conventional art in the field. The present invention can be carried out based on the contents disclosed herein and the technical knowledge in the present field. In the following drawings, the same members/portions which exhibit the same action are denoted by the same reference numerals, and the duplicated descriptions may be omitted or simplified. The dimensional relation (such as length, width, or thickness) in each drawing may not necessarily reflect the actual dimensional relation. The expression "A to B" (A and B are any numerical values) indicating herein a range means A or more to B or less, and also encompasses the meaning of "preferably more than A" and "preferably less than B."

### [First Embodiment]

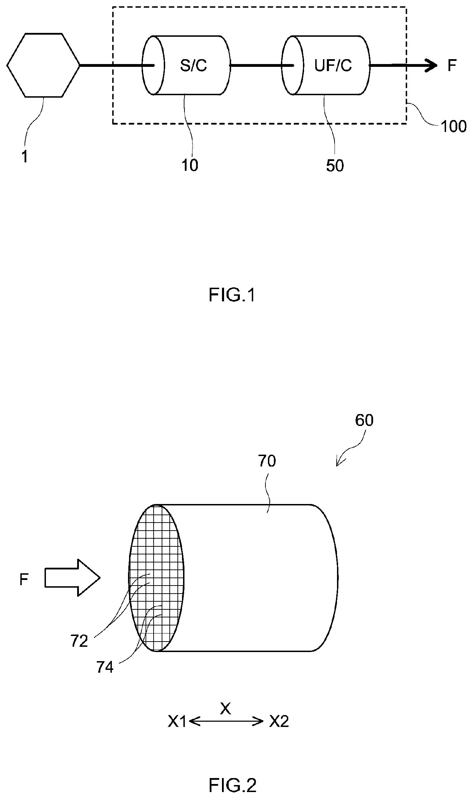

Fig. 1 is a schematic view of an exhaust gas purification system 100 according to a first embodiment using an example of an exhaust gas purification catalyst body for gasoline engine, disclosed herein. The term "gasoline engine" herein refers to an engine which uses gasoline as fuel and in which the air-fuel mixture is burnt at an air-to-fuel ratio from a rich region to a lean region, including the theoretical air-fuel ratio (air : gasoline = 14.7 : 1) and which does not include a lean burn engine.

The exhaust gas purification system 100 is configured to be placed in an exhaust path for a gasoline engine 1, and is connected to the gasoline engine 1. The arrow F shown in Fig. 1 represents an exhaust gas flow direction. The exhaust gas purification system 100 includes an upstream catalyst converter 10 and a downstream catalyst converter 50. The terms "upstream" and "downstream" of the catalytic converter indicate a positional relationship in the exhaust gas flow direction. Therefore, the downstream catalytic converter 50 is located downstream in the exhaust gas flow direction F of the exhaust path of the gasoline engine 1 than the upstream catalytic converter 10.

The upstream catalyst converter 10 includes a first catalyst body and a first housing accommodating the first catalyst body. The downstream catalyst converter 50 includes a second catalyst body and a second housing accommodating the second catalyst body. The first catalyst body is present upstream of the second catalyst body in the exhaust gas flow direction F. The first catalyst body is typically a start-up catalyst (S/C), but is not limited thereto. The second catalyst body is present downstream of the first catalyst body in the exhaust gas flow direction F. The second catalyst body is typically an underfloor catalyst (UF/C), but is not limited thereto. The configurations of the first housing and the second housing may be the same as or similar to the configurations of the housings used for known start-up catalyst and underfloor catalyst.

The first catalyst body and the second catalyst body will be described in detail below. The first catalyst body may be the same as or similar to the configuration of the known catalyst body. In contrast, as the second catalyst body, the gas purification catalyst body for gasoline engine, disclosed herein, is used. Thus, the second catalyst body will be described first.

### <Second Catalyst body>

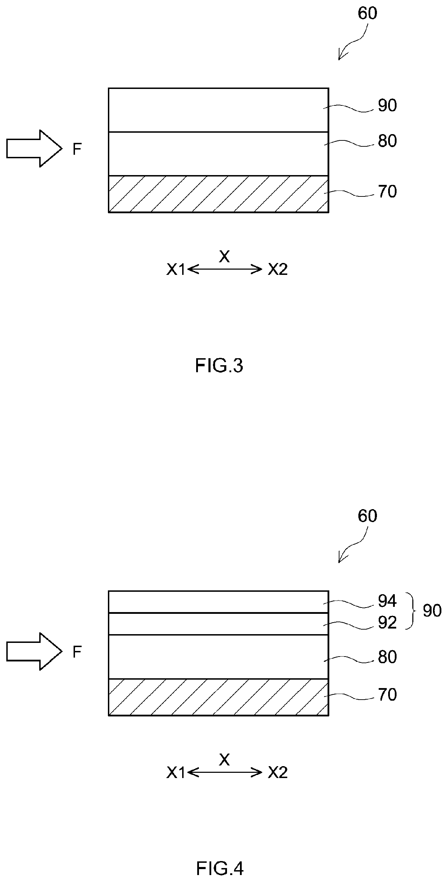

Configuration examples of the second catalyst body are shown in Figs. 2 to 4. In particular, as shown in Figs. 3 and 4, a second catalyst body 60 has a structure in which a NH₃ adsorption layer 80 and a second catalyst layer 90 are stacked on a second base material 70. Thus, the second catalyst body 60 includes a second base material 70, an NH₃ adsorption layer 80, and a second catalyst layer 90.

The second base material 70 constitutes the framework of the second catalyst body 60. The base material 70 is not particularly limited, and can adopt various materials and forms which have been commonly used in this kind of use. The second base material 70 may be a ceramics carrier made of ceramics such as cordierite, aluminum titanate, and silicon carbide or a metal carrier made of stainless steel (SUS), a Fe-Cr-Al alloy, and an Ni-Cr-Al alloy. As illustrated in Fig. 2, the second base material 70 has a honeycomb structure. The second base material 70 of the example illustrated in Fig. 2 is a straight-flow type base material, but may be a wall-follow type base material.

In Fig. 2, the direction X indicates a cylinder axis direction of the second base material 70, X1 indicates the upstream side in the exhaust gas flow direction F, and X2 indicates the downstream side in the exhaust gas flow direction. The second base material 70 includes a plurality of cells (hollows) 72 regularly arranged in the cylinder axis direction X, and partitions (ribs) 74 partitioning the cells 72. Although not particularly limited thereto, the volume of the second base material 70 (the apparent volume including the volume of the cells 72) may be approximately 0.1 L to 10 L, for example, about 0.5 L to about 5 L. The average length (full length) L of the second base material 70 along the cylinder axis direction X may be approximately 10 mm to 500 mm, for example, 50 mm to 300 mm.

The cells 72 each form an exhaust gas passage. The cells 72 each extend in the cylinder axis direction X. The cells 72 are each a through hole passing through the second base material 70 in the cylinder axis direction X. The shape, size, number, and the like of the cells 72 can be designed in consideration of the flow rate and components of the exhaust gas flowing through the second catalyst body 60, for example. The cross-sectional shape of the cells 72 orthogonal to the cylinder axis direction X is not particularly limited. The cross-sectional shape of the cells 72 may be, for example, any of various geometric shapes, namely a quadrilateral such as square, parallelogram, rectangle, trapezoid; other polygons (e.g., triangle, hexagonal, octagonal); corrugate, and circular. The partitions 74 face the cells 72 and each partition adjacent cells 72. Although not particularly limited thereto, the average thickness of each partition 74 (the dimension of each partition 74 in the direction orthogonal to its surface, hereinafter the same) may be approximately 0.1 mil to 10 mil (1 mil = about 25.4 µm), for example, about 0.2 mil to about 5 mil, to improve mechanical strength and reduce pressure loss. The partition 74 may be porous to allow the exhaust gas to pass therethrough.

The NH₃ adsorption layer 80 and the second catalyst layer 90 are stacked on this second base material 70. At this time, as illustrated in Fig. 3, in the second catalyst body 60, the NH₃ adsorption layer 80 is located closer to the second base material 70 (i.e., located on the lower layer side) than the second catalyst layer 90. When the second catalyst layer 90 is located on the upper layer side than the NH₃ adsorption layer 80, NH₃ can be efficiently removed.

The NH₃ adsorption layer 80 contains proton-type zeolite as a NH₃ adsorbent. Thus, zeolite contained in the NH₃ adsorption layer 80 is proton-type zeolite having NH₃ adsorption capacity. This can increase the adsorption intensity of NH₃ at the adsorption site of the Lewis acid site, and can exhibit NH₃ adsorption capacity suitable for the environmental temperature range (e.g., 350°C to 600°C) where the exhaust gas purification catalyst body in gasoline engine is used. The proton-type zeolite having a basic skeleton substantially consisting of 4-, 6-, and 8 membered rings is used. Thus, the proton-type zeolite used is small-pore zeolite. Zeolite has a pore diameter in the molecular order, and its adsorption performance depends on its pore diameter. Here, NH₃ has a molecular size of 2.6 Å (angstrom: 0.26 nm). Therefore, the basic skeleton of the proton-type zeolite substantially consists of only 4-, 6-, or 8-membered rings, and thus can capture NH₃ efficiently. In particular, if the number of ring members exceeds 8, the pore diameter becomes too large and hydrocarbons are also adsorbed, which can reduce NH₃ adsorption efficiency.

In addition, since the charge compensating cation species of the zeolite are protons, the reduction in NH₃ adsorption capacity due to elution of metals derived from charge compensating cations can be substantially prevented. The term "proton-type zeolite" herein refers to zeolite in which all of the ion-exchangeable cationic sites are occupied by protons (H⁺). Typically, for example, proton-type zeolite is zeolite obtained without undergoing an ion exchange process. The proton-type zeolite obtained by being subjected to conversion treatment in production of the NH₃ adsorption layer 80 can also be used. For example, the proton-type zeolite may be obtained by converting zeolite having ammonium ions (NH₄⁺) as a charge compensating cation species into the proton-type zeolite through firing of the zeolite having ammonium ions (NH₄⁺) in production of the NH₃ adsorption layer 80.

Note that the zeolite may have structural defects. In terms of this point, the "zeolite having a basic skeleton substantially consisting of 4-, 6-, and 8 membered rings" herein includes not only the zeolite having a basic skeleton consisting only of 4-, 6-, and 8 membered rings, but also the zeolite having the basic skeleton further including other rings due to structural defects caused by technical limitations in production or the like within the range in which the effects of the present invention are not significantly hindered.

As an example of zeolite having a basic skeleton substantially consisting of 4-, 6-, and 8 membered rings, in the present embodiment, chabazite-type zeolite (CHA-type zeolite) is used. The "CHA-type zeolite" herein refers to zeolite having a crystal structure, which is a CHA structure in the IUPAC structure code defined by the International Zeolite Association. The CHA-type zeolite has three-dimensional pores consisting of oxygen 8-membered rings having a diameter of 0.38 mm × 0.38 mm.

Examples of the chabazite-type zeolite include SSZ-13, SSZ-62, LZ-218, Linde D, Linde R, and ZK-14, and the chabazite-type zeolite is preferably SSZ-13 among them.

Other examples of the zeolite having a basic skeleton substantially consisting of 4-, 6-, and 8 membered rings include ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, LTA, KFI, MER, MON, NSI, OWE, PAU, PHI, RHO, RTH, SAT, SAV, SIV, THO, TSC, UEI, UFI, VNI, YUG, and ZON-type zeolite.

As the proton-type zeolite, CHA-type zeolite is suitable. As the proton-type zeolite, AFX-type zeolite is also suitable. One kind of the proton-type zeolites may be used alone or two of more kinds of the proton-type zeolites may be used in combination.

The crystal structure of zeolite can be checked by measurement on powder X-ray diffraction spectrometry. Specifically, the crystal structure can be checked by measuring the powder X-ray diffraction pattern of zeolite contained in the NH₃ adsorption layer 80 and then comparing it with the powder X-ray diffraction pattern of zeolite having a known basic skeleton.

The SiO₂/Al₂O₃ ratio in the proton-type zeolite is not particularly limited and is, for example, 5 to 500, preferably 10 to 100.

The amount of the zeolite in the NH₃ adsorption layer 80 is 50 mass% or more in terms of higher NH₃ purifying performance after endurance. In the case where the variation of the exhaust gas atmosphere is small, the increase in the amount of zeolite in the NH₃ adsorption layer 80 is advantageous with respect to the higher NH₃ purifying performance after endurance.

The NH₃ adsorption layer 80 may further contain an optional component other than the zeolite. The optional component can be, for example, an oxygen absorbing and releasing material (i.e., OSC material) having an oxygen absorbing and releasing ability. As the OSC material, a compound known to have an oxygen storage capacity may be used, and examples thereof include metal oxide (Ce-containing oxides) containing ceria (CeO₂). The Ce-containing oxide may be ceria or a composite oxide of ceria and a metal oxide other than ceria. In light of improving heat resistance and durability, the Ce-containing oxide may be a composite oxide containing at least one of Zr or Al, for example, a ceria (CeO₂)-zirconia (ZrO₂) composite oxide (CZ composite oxide). In light of improving heat resistance, the CZ composite oxide may further contain a rare-earth metal oxide such as Nd₂O₃, La₂O₃, Y₂O₃, and Pr₆O₁₀.

In the case where the OSC material is a composite oxide containing cerium oxide, in terms of sufficiently exhibit its oxygen storage capacity, the content of the cerium oxide is preferably 15 mass% or more, more preferably 20 mass% or more. When the content of cerium oxide is too high, the basicity of the OSC material may be too high. Thus, the content of the cerium oxide is preferably 60 mass% or less, more preferably 50 mass% or less.

The amount of the OSC material in the NH₃ adsorption layer 80 is not particularly limited. The amount of the OSC material in the NH₃ adsorption layer 80 is, for example, 10 mass% or more, preferably 20 mass% or more. On the other hand, the amount of the OSC material is, for example, 60 mass% or less, preferably 40 mass% or less.

Another examples of the optional component in the NH₃ adsorption layer 80 include catalyst noble metals. When the NH₃ adsorption layer 80 contains a catalyst noble metal, exhaust gas can be purified also in the NH3 adsorption layer 80.

Examples of the catalyst noble metal include: platinum group metals, namely rhodium (Rh), palladium (Pd), platinum (Pt), ruthenium (Ru), osmium (Os), and iridium (Ir); gold (Au); and silver (Ag). These catalyst noble metals may be used alone or in combination of two or more of them. In terms of the catalytic capacity, the catalyst noble metal is preferably at least one selected from the group consisting of Pt, Rh, Pd, Ir, and Ru, more preferably at least one selected from the group consisting of Pt, Rh, and Pd. When two or more of the catalyst noble metals are used, the catalyst noble metal may be an alloy of two or more metal species.

The catalyst noble metal may be carried on the OSC material or the non-OSC material (e.g., alumina (Al₂O₃), titania (TiO₂), zirconia (ZrO₂), and silica (SiO₂).

Yet another examples of the optional component in the NH₃ adsorption layer 80 include binders such as aluminum sol and silica sol, and various additives.

The coating amount (i.e., the formation amount) of the NH₃ adsorption layer 80 is not particularly limited. The coating amount is, for example, 3 g/L to 200 g/L or may be 10 g/L to 100 g/L per 1 L of volume of the portion of the base material on which the NH₃ adsorption layer 80 is formed along the cylinder axis direction X. When the coating amount is within the range, both improvement in harmful component-purifying performance and reduction in pressure loss can be achieved at a high level. Further, durability and peeling resistance can be improved.

The thickness of the NH₃ adsorption layer 80 is not particularly limited, and can be designed appropriately in consideration of durability and peeling resistance, for example. The thickness of the NH₃ adsorption layer 80 is, for example, 1 µm to 100 µm, or may be 5 µm to 100 µm.

The coating width of the NH₃ adsorption layer 80 (the average dimension in the cylinder axis direction X) is not particularly limited, and can be designed appropriately in consideration of the size of the second base material 70 and the flow rate of exhaust gas distributed in the second catalyst body 60, for example. The coating width is, for example, 10% to 100%, preferably 20% to 100%, more preferably 30% to 100%, of the overall length of the base material in the cylinder axis direction X.

The second catalyst layer 90 contains a catalyst noble metal. The catalyst noble metal is usually carried on a carrier, and thus, the second catalyst layer 90 usually contains a three-way catalyst. The second catalyst layer 90 can be configured in the same manner as for the known catalyst layer containing a three-way catalyst.

The catalyst noble metal is a catalyst metal component for purifying harmful components in exhaust gas. Examples of the catalyst noble metal include those mentioned as examples of the catalyst noble metal used in the NH₃ adsorption layer 80. The catalyst noble metals may be used alone or in combination of two or more of them. In terms of catalytic capacity, the catalyst noble metal is preferably at least two selected from the group consisting of Pt, Rh, Pd, Ir, and Ru, and is preferably a combination of Rh, which has high reduction activity, and at least one of Pd or Pt, each of which has high oxidation activity.

The catalyst noble metal is used preferably as fine particles having a sufficiently small particle diameter. The average particle diameter of catalyst noble metal particles (specifically, an average value of particle diameters of 20 or more noble metal particles determined based on a cross-sectional image of the catalyst layer by a transmission electron microscope) is usually about 1 nm to about 15 nm, preferably 10 nm or less, more preferably 7 nm or less, yet more preferably 5 nm or less. This allows a increase in contact area between the catalyst noble metal and exhaust gas, thereby improving the purifying performance.

The amount of the catalyst noble metal in the second catalyst body 60 (the total amount of the catalyst noble metal in the NH₃ adsorption layer 80 and the second catalyst layer 90) is not particularly limited, and can be determined appropriately according to the kind of the catalyst noble metal. In terms of particularly high exhaust gas purification performance, the amount of the catalyst noble metal per 1 L of the volume of the second base material 70 may be, for example, 0.01 g/L or more, 0.03 g/L or more, 0.05 g/L or more, 0.08 g/L or more, or 0.10 g/L or more. In terms of balance between the exhaust gas purification performance and the cost, the amount may be, for example, 5.00 g/L or less, 3.00 g/L or less, 2.00 g/L or less, 1.50 g/L or less, 1.00 g/L or less, 0.80 g/L or less, or 0.50 g/L or less.

"Per 1 L of volume of the base material" herein refers to per 1 L of bulk volume including the pure volume of the base material and the volume of the cell passage. In the following description, the term "g/L" refers to the amount contained in 1 L of the volume of the base material.

The second catalyst layer 90 preferably contains the OSC material. Examples of the OSC material contained in the second catalyst layer 90 include those mentioned as examples of the OSC material which can be used in the NH₃ adsorption layer 80.

The OSC material may or may not carry the catalyst noble metal. An aspect in which a portion of the OSC material carries the catalyst noble metal, and the other portion of the OSC material does not carry the catalyst noble metal is also possible.

The second catalyst layer 90 may further include a non-OSC material (i.e., a material having no oxygen absorbing and releasing ability), and the catalyst noble metal may be carried on the non-OSC material. Examples of the non-OSC material include alumina (Al₂O₃), titania (TiO₂), zirconia (ZrO₂), and silica (SiO₂).

Thus, in the second catalyst layer 90, either or both the OSC material and the non-OSC material are usually used as a carrier. The carrier preferably has a large specific surface area, and is more suitably porous carrier particles. In terms of heat resistance and structural stability, carrier particles have a specific surface area of preferably 50 m²/g to 500 m²/g (especially, 200 m²/g to 400 m²/g), as determined by the BET method. The average particle diameter of carrier particles (specifically, an average value of particle diameters of 20 or more carrier particles determined based on a cross-sectional image of the catalyst layer by a transmission electron microscope) is preferably from 1 nm to about 500 nm (especially from 10 nm to 200 nm).

The amount of the OSC material in the second catalyst layer 90 is, for example, 10 mass% or more, preferably 30 mass% or more, more preferably 40 mass% or more. The amount of the OSC material in the second catalyst layer 90 is, for example, less than 90 mass%, preferably less than 60 mass%, more preferably 50 mass% or less.

The amount of the non-OSC material in the second catalyst layer 90 is, for example, 10 mass% or more, preferably 30 mass% or more, more preferably 40 mass% or more. The amount of the non-OSC material in the second catalyst layer 90 is, for example, less than 90 mass%, preferably less than 70 mass%, more preferably less than 60 mass%.

The second catalyst layer 90 may further contain a component other than the above components. For example, the second catalyst layer 90 may further contain a metal species such as alkali metal elements, alkali earth metal elements, transition metal elements, and rare-earth elements. These elements (especially alkaline earth elements) may be contained in the form of oxides, hydroxides, carbonates, nitrates, sulfates, phosphates, acetates, formates, oxalates, and halides. It is preferable that in the second catalyst layer 90, an alkaline earth metal element (especially Ba) and Pt and/or Pd are present together.

Examples of the other optional components in the second catalyst layer 90 include binders such as aluminum sol and silica sol, NOx absorbents having NOx storage capacity, and various additives such as stabilizers.

The second catalyst layer 90 may have a monolayer structure or a multilayer structure. In the example shown in Fig. 3, the second catalyst layer 90 is a monolayer. When the second catalyst layer 90 has a monolayer structure, the second catalyst layer 90 may include multiple regions with difference compositions, properties, and the like. For example, the second catalyst layer 90 may have a front portion located on upstream side X1 in the cylinder axis direction X and a rear portion located on downstream side X2 relative to the front portion, with these portions having different compositions and/or properties. Specifically, for example, the front portion and the rear portion may contain different catalyst noble metals.

When the second catalyst layer 90 has a multilayer structure, the number of layers is not particularly limited. The second catalyst layer 90 may have a bilayer structure having a layer on the base material side (lower layer) and a layer on the surface part side (upper layer), or a structure of three or more layers having a layer on the base material side (lower layer), a layer on the surface part side (upper layer), and one or more intermediate layers located between them. In this multilayer structure, each layer may contain a different catalyst noble metal.

The example where the second catalyst layer 90 has a multilayer structure is shown in Fig. 4. In Fig. 4, the NH₃ adsorption layer 80 is provided on the second base material 70, and the second catalyst layer 90 is provided on the NH₃ adsorption layer 80.

The second catalyst layer 90 has a lower layer portion 92 which is a layer on the base material side, and an upper layer portion 94 provided on the lower layer portion 92. In the examples shown in Fig. 4, the upper layer portion 94 is also a layer on the exposed surface side (the surface part side) of the second catalyst layer 90. The lower layer portion 92 and the upper layer portion 94 of the second catalyst layer 90 each contain a catalyst noble metal. The lower layer portion 92 contains an oxidation catalyst such as Pd and Pt as a catalyst noble metal. The upper layer portion 94 contains a reduction catalyst such as Rh as a catalyst noble metal. In such a case, separately carrying the oxidation catalyst and the reduction catalyst in the lamination direction can suppress degradation of the catalyst noble metal (e.g., sintering with particle growth), and can improve durability of the second catalyst body 60 more.

When the lower layer portion 92 contains Pd as a catalyst noble metal, and the upper layer portion 94 contains Rh as a catalyst noble metal, the NH₃ purifying performance of the second catalyst body 60 after the endurance is particularly high, which is preferable.

The coating amount (i.e., the formation amount) of the second catalyst layer 90 is not particularly limited. The coating amount is, for example 10 g/L to 500 g/L or may be 100 g/L to 200 g/L, per 1 L of the volume of the portion of the base material on which the catalyst layer 20 is formed along the cylinder axis direction X. When the coating amount is within the range, both improvement in harmful component purifying performance and reduction in pressure loss can be achieved at a high level. Further, durability and peeling resistance can be improved.

The thickness of the second catalyst layer 90 is not particularly limited, and can be designed appropriately in consideration of durability and peeling resistance, for example. The thickness of the second catalyst layer 90 is, for example, approximately 1 µm to 100 µm, preferably 5 µm to 100 µm

The coating width of the second catalyst layer 90 (the average dimension in the cylinder axis direction X) is not particularly limited, and can be designed appropriately in consideration of the size of the second base material 70 and the flow rate of exhaust gas distributed in the second catalyst body 60, for example. The coating width is, for example, 10% to 100%, preferably 20% to 100%, more preferably 30% to 100%, of the overall length of the base material in the cylinder axis direction X.

The second catalyst body 60 may have a layer other than the NH₃ adsorption layer 80 and the second catalyst layer 90.

The second catalyst body 60 can be produced according to the known methods. For example, a NH₃ adsorption layer-forming slurry containing the proton-type zeolite, a solvent, optional components (e.g., an OSC material, a catalyst noble metal source, a binder, and the like) is prepared. Further, a slurry containing a catalyst noble metal source, an OSC material, a non-OSC material if necessary, a solvent, and other optional components is prepared. Of these slurries, one for a lower layer is applied to the second base material 70 according to a known method and then dried if necessary, fired, thereby forming a lower layer. Then, the slurry for an upper layer is applied to a lower layer formed on the second base material 70 according to a known method, dried if necessary, and fired, thereby forming an upper layer. Thus, a second catalyst body 60 is obtained.

### <First Catalyst body>

The first catalyst body 20 may have the same or similar configuration to a start-up catalyst in the known exhaust gas purification system for gasoline engine, including the start-up catalyst (S/C) and an underfloor catalyst (UF/C).

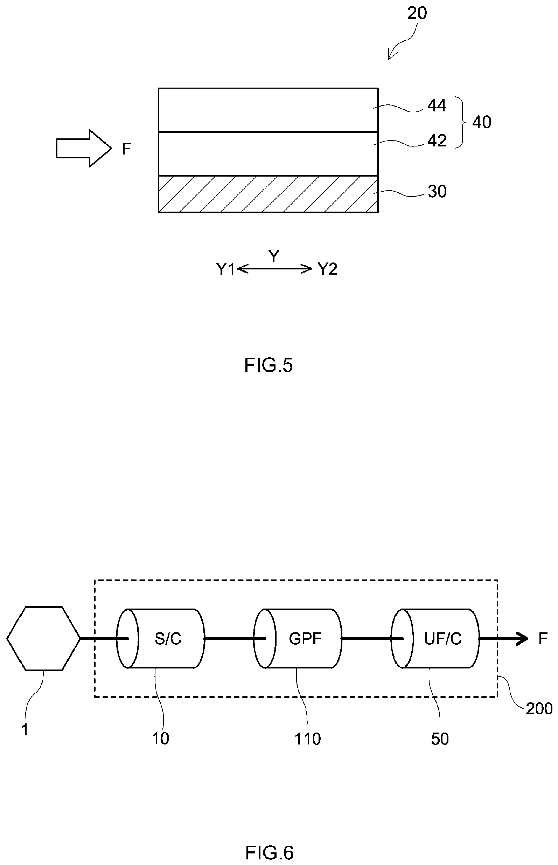

Fig. 5 shows an example of the first catalyst body 20. For example, the first catalyst body 20 includes a first base material 30 and a first catalyst layer 40. The first catalyst body 20 is typically placed at a position (closed couple (CC) position) near an exhaust manifold and an engine room in the exhaust path of the gasoline engine 1.

In the first embodiment, a straight flow type base material is used as a first base material 30. However, the first base material 30 is not limited thereto, and may be a wall-flow type base material. For example, as in the embodiment described below, the first catalyst body 20 can be configured as a catalyst coated type gasoline particulate filter (GPF) by using a wall-flow type base material as a first base material 30.

The first base material 30 may be a ceramics carrier made of ceramics such as cordierite, aluminum titanate and silicon carbide, or a metal carrier made of stainless steel (SUS), a Fe-Cr-Al alloy, and an Ni-Cr-Al alloy.

In the first embodiment, the first catalyst body 20 has one first base material 30, but is not limited thereto. For example, as in the embodiment described below, the first catalyst body 20 may be a tandem type catalyst body including multiple first base materials 30, each of which is provided with a first catalyst layer 40. In the tandem type catalyst body, the kinds of the multiple first base materials 30 may be the same as or different from each other. Compositions of the multiple first catalyst layers 40 may be the same as or different from each other.

The first catalyst layer 40 contains a catalyst noble metal. The catalyst noble metal contained in the first catalyst layer 40 may be the same as or similar to the noble metal catalyst contained in the second catalyst layer 90 of the second catalyst body 60. The first catalyst layer 40 usually contains a carrier carrying a catalyst noble metal. The carrier contained in the first catalyst layer 40 may be the same as or similar to the carrier contained in the second catalyst layer 90 of the second catalyst body 60. The other components contained in the first catalyst layer 40 may also be the same as or similar to those for the second catalyst layer 90 in the second catalyst body 60.

The first catalyst layer 40 may have a monolayer structure or a multilayer structure. When the second catalyst layer 40 has a monolayer structure, the first catalyst layer 40 may include multiple regions with difference compositions, properties, and the like. For example, the first catalyst layer 40 may have a front portion located on upstream side Y1 in the cylinder axis direction Y and a rear portion located on downstream side Y2 relative to the front portion, with these portions having different compositions and/or properties. Specifically, for example, the front portion and the rear portion may contain different catalyst noble metals.

When the first catalyst layer 40 has a multilayer structure, the number of layers is not particularly limited. The first catalyst layer 40 may have a bilayer structure having a layer on the base material side (lower layer) and a layer on the surface part side (upper layer), or a structure of three or more layers having a layer on the base material side (lower layer), a layer on the surface part side (upper layer), and one or more intermediate layers located between them. In this multilayer structure, each layer may contain a different noble metal.

In the examples shown in Fig. 5, the first catalyst layer 40 has a multilayer structure having a lower layer portion 42 on the base material side and an upper layer portion 44 on an exposed surface side. The lower layer portion 42 and the upper layer portion 44 of the first catalyst layer 40 each contain a catalyst noble metal. The lower layer portion 42 contains Pd as a catalyst noble metal. The upper layer portion 44 contains Rh as a catalyst noble metal. In such a case, separately carrying the oxidation catalyst and the reduction catalyst in the lamination direction can suppress degradation of the catalyst metal (e.g., sintering with particle growth), and can improve durability of the first catalyst body 20 more.

The first catalyst body 20 can be produced according to the known methods. Further, a slurry containing a catalyst noble metal source, an OSC material, a non-OSC material, a solvent, and optional components is prepared. The slurry is applied to the second base material 70 according to a known method and then dried if necessary, fired, thereby forming a first catalyst layer 40. Accordingly, the first catalyst body 20 is obtained.

### <<Exhaust Gas Purification System 100>>

In a gasoline engine 1, an air-fuel mixture is burned at an air-to-fuel ratio from a rich region to a lean region, which includes the theoretical air-fuel ratio. As shown in Fig. 1, exhaust gas generated in the gasoline engine 1 is first purified in the first catalyst body 20 of an upstream catalytic converter 10. The first catalyst body 20 contains a catalyst noble metal of three-way catalyst, NH₃ is generated when NOx is purified, and exhaust gas containing NH₃ flows out of the upstream catalyst converter 10.

The exhaust gas which has flows out of the upstream catalyst converter 10 flows into a downstream catalyst converter 50. When the temperature in the downstream catalyst converter 50 is low and has not reached a catalytic activity temperature, NH₃ cannot be purified. In contrast, in an exhaust gas purification system 100, the second catalyst body 60 includes a NH₃ adsorption layer 80. As a result, NH₃ contained in exhaust gas is adsorbed by the NH₃ adsorption layer 80 in the second catalyst body 60 of the downstream catalyst converter 50, so that it is substantially prevented from being discharged outside the exhaust gas purification system 100. NH₃ adsorbed in the NH₃ adsorption layer 80 is purified in the second catalyst layer 90, for example, at a timing of fuel cut (F/C).

Unlike diesel engines and lean-burn engines, in the gasoline engine, the use temperature environment of the exhaust gas purification system is typically about 350°C to about 600°C, which is high, and the atmosphere varies between rich and lean atmospheres. As a result of earnest studies, the present inventors have found as follows. In zeolite carrying a metal such as Cu-CHA, the adsorption intensity at the adsorption site of the Lewis acid site at which NH₃ is released at about 350°C is weak, and NH₃ cannot be sufficiently retained at the adsorption site of the Lewis acid site. Thus, the metal such as Cu carried on zeolite may elute according to the variation of the atmosphere at high temperatures, causing structural degradation of the zeolite, a decrease in activity of the catalyst noble metal, and the like.

Based on the findings, in the second catalyst body 60 of the downstream catalyst converter 50 in the exhaust gas purification system 100 according to this embodiment, proton-type zeolite having a basic skeleton substantially consisting of 4-, 6-, and 8 membered rings is used as an adsorbent of the NH₃ adsorption layer 80. This can increase the adsorption intensity of NH₃ by the adsorption site at the Lewis acid site, and can exhibit NH₃ adsorption capacity suitable for the environmental temperature range where the exhaust gas purification catalyst body in gasoline engine is used. Specifically, the basic skeleton substantially consists of 4-, 6-, and 8 membered rings, thereby effectively exhibiting NH₃ adsorption capacity. Further, the cationic species of the zeolite is proton, thereby solving the problem of the metal elution.

In the second catalyst body 60, the NH₃ adsorption layer 80 is located closer to the second base material 70 than the catalyst layer 90, thereby efficiently purifying NH₃. As a result, according to the exhaust gas purification system 100 of this embodiment, the NH₃ purifying performance after endurance is enhanced.

### <<Other Embodiments>>

Figs. 6 to 12 show other embodiments. In the following embodiments, explanations are omitted for the same portions as in the first embodiment.

An exhaust gas purification system 200 for gasoline engine, according to the second embodiment shown in Fig. 6 is configured to be placed in an exhaust path of a gasoline engine 1, and the exhaust gas purification system 200 is connected to the gasoline engine 1. The exhaust gas purification system 200 includes an upstream catalyst converter 10, a downstream catalyst converter 50, and a gasoline particulate filter (GPF) 110. GPF 110 is located downstream of the upstream catalyst converter 10 and upstream of the downstream catalyst converter 50 in the exhaust gas flow direction F. In other words, the exhaust gas purification system 200 for gasoline engine, according to the second embodiment is configured such that the GPF 110 is added between the upstream catalyst converter 10 and the downstream catalyst converter 50 in the exhaust gas purification system 100 for gasoline engine, according to the first embodiment. As the GPF 110, a known GPF used in the known exhaust gas purification system for gasoline engine can be used.

With such a configuration, particulate matters (PMs) in exhaust gas can be captured by the GPF. Accordingly, with such a configuration, the exhaust gas purification system for gasoline engine, with high NH₃ purifying performance after endurance and a lower PM emission can be provided.

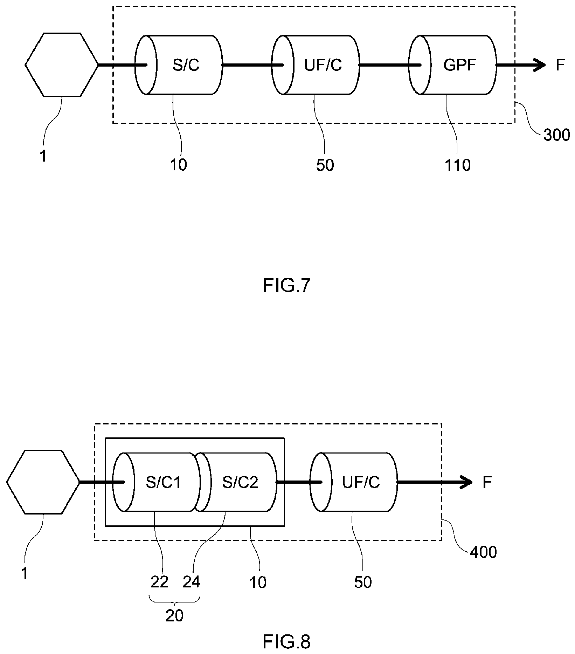

An exhaust gas purification system 300 for gasoline engine, according to a third embodiment shown in Fig. 7 includes a gasoline particulate filter (GPF) 110 as in the second embodiment. However, the GPF 110 is located downstream of the downstream catalyst converter 50 in the exhaust gas flow direction F. In other words, the exhaust gas purification system 300 for gasoline engine, according to the third embodiment is configured such that the GPF 110 is added downstream of the downstream catalyst converter 50 in the exhaust gas purification system 100 for gasoline engine, according to the first embodiment.

With such a configuration, PMs in exhaust gas can be captured by the GPF. Accordingly, with such a configuration, the exhaust gas purification system for gasoline engine, with high NH₃ purifying performance after endurance and a lower PM emission can be provided.

In an exhaust gas purification system 400 for gasoline engine, according to a fourth embodiment shown in Fig. 8, the first catalyst body 20 of the upstream catalyst converter 10 is a tandem type catalyst body including an upstream catalyst body 22 and a downstream catalyst body 24, which is different from the exhaust gas purification system 100 for gasoline engine, according to the first embodiment. With such a configuration, the purifying performance of the first catalyst body 20 can be further enhanced.

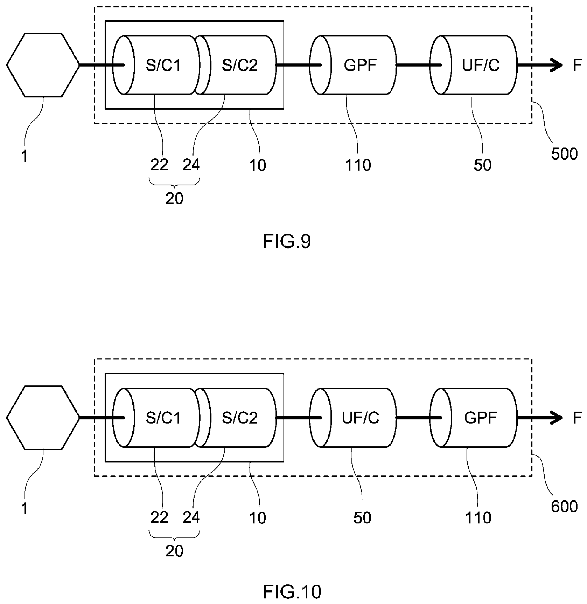

In an exhaust gas purification system 500 for gasoline engine, according to a fifth embodiment shown in Fig. 9, the first catalyst body 20 of the upstream catalyst converter 10 is a tandem type catalyst body including an upstream catalyst body 22 and a downstream catalyst body 24, and the GPF 110 is located downstream of the upstream catalyst converter 10 and upstream of the downstream catalyst converter 50 in the exhaust gas flow direction F. In other words, the exhaust gas purification system 500 for gasoline engine, according to the fifth embodiment is configured such that the GPF 110 is added between the upstream catalyst converter 10 and the downstream catalyst converter 50 in the exhaust gas purification system 400 for gasoline engine, according to the fourth embodiment. With such a configuration, the purifying performance of the first catalyst body 20 can be further enhanced, and PMs in exhaust gas can be efficiently captured.

In an exhaust gas purification system 600 for gasoline engine, according to a sixth embodiment shown in Fig. 10, the first catalyst body 20 of the upstream catalyst converter 10 is a tandem type catalyst body including an upstream catalyst body 22 and a downstream catalyst body 24, and the GPF 110 is located downstream of the downstream catalyst converter 50 in the exhaust gas flow direction F. In other words, the exhaust gas purification system 600 for gasoline engine, according to the sixth embodiment is configured such that the GPF 110 is added downstream of the downstream catalyst converter 50 in the exhaust gas purification system 400 for gasoline engine, according to the fourth embodiment. With such a configuration, the purifying performance of the first catalyst body 20 can be further enhanced, and PMs in exhaust gas can be efficiently captured.

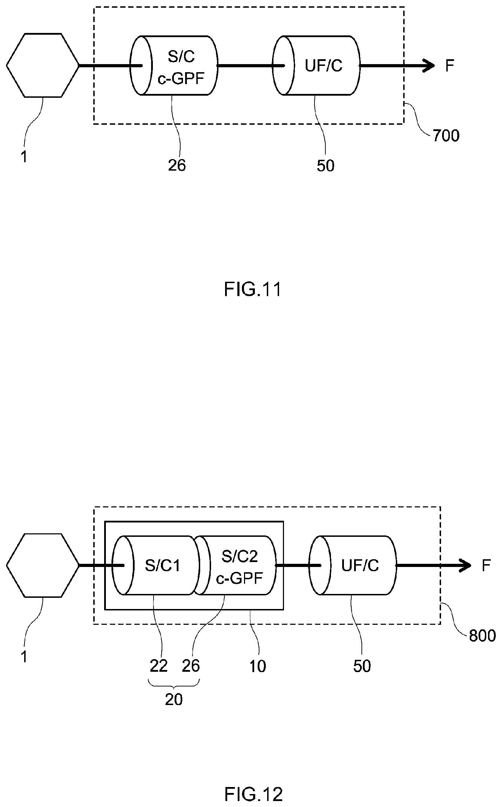

In an exhaust gas purification system 700 for gasoline engine, according to a seventh embodiment shown in Fig. 11, a wall-flow type base material is used as the base material of a first catalyst body 26 of an upstream catalyst converter 10, and the base material of the first catalyst body 26 has a function of GPF. With such a configuration, PMs in exhaust gas can be captured by the GPF. Accordingly, with such a configuration, the exhaust gas purification system for gasoline engine, with high NH₃ purifying performance after endurance and a lower PM emission can be provided.

In an exhaust gas purification system 800 for gasoline engine, according to an eighth embodiment shown in Fig. 12, the first catalyst body 20 of the upstream catalyst converter 10 is a tandem type catalyst body including an upstream catalyst body 22 and a downstream catalyst body 26. A wall-flow type base material is used as a base material of the downstream catalyst body 26, and the base material of the downstream catalyst body 26 has a function of GPF. With such a configuration, the purifying performance of the first catalyst body 20 can be further enhanced, and PMs in exhaust gas can be efficiently captured.

Embodiments in which the exhaust gas purification catalyst body for gasoline engine, disclosed herein, is used in the exhaust gas purification catalyst system have been described above. However, the exhaust gas purification catalyst body for gasoline engine, disclosed herein, may be used alone. Alternatively, the exhaust gas purification catalyst body for gasoline engine, disclosed herein, can be configured as a tandem catalyst including an upstream catalyst body which includes: a base material and a catalyst layer containing a catalyst noble metal; and a downstream catalyst body that is the exhaust gas purification catalyst body for gasoline engine, disclosed herein. This tandem catalyst can be housed in a housing of single catalytic converter.

### <<Application of Exhaust Gas Purification System 100 for Gasoline Engine>>

The exhaust gas purification system 100 for gasoline engine is suitably applicable to purify exhaust gas emitted from gasoline engines of not only vehicles such as cars, trucks, and motorcycles, but also ships. Among them, the exhaust gas purification system 100 can be used suitably in vehicles such as cars and trucks including gasoline engines. The exhaust gas purification system 100 for gasoline engine can efficiently adsorb and remove NH₃ in an environment where reducing gas can exist, so that it is applicable for purification of exhaust gas of an H₂ engine, an NH₃ engine, and an e-Fuel engine.

Some test examples regarding the present invention will be described below. However, it is not intended that the present invention is limited to such test examples.

### Example 1

As a first base material, honeycomb base material (made of cordierite, diameter: 117 mm, overall length: 100 mm, the number of cells per square inch: 600 cpsi) was prepared. Palladium nitrate, a CeO₂-ZrO₂ composite oxide powder (OSC material), a Al₂O₃ powder, barium sulfate, a binder, and ion-exchange water were mixed to prepare a Pd-containing slurry. The Pd-containing slurry was poured into the first base material as a lower layer forming slurry, and unnecessary portion of the Pd-containing slurry was blown away by a blower, thereby coating the surface of the first base material with a lower layer forming material. The resultant was then fired in an electric furnace, thereby forming the lower layer containing a Pd catalyst on the first base material.

Rhodium nitrate, a CeO₂-ZrO₂ composite oxide powder (OSC material), a Al₂O₃ powder, a binder, and ion-exchange water were mixed to prepare a Rh-containing slurry. This Rh-containing slurry was poured, as an upper layer forming slurry, into the first base material on which the lower layer had been formed, and unnecessary portion of the Rh-containing slurry was blown away by a blower, thereby coating the surface of the lower layer formed on the base material with an upper layer forming material. The resultant was then fired in an electric furnace, thereby forming the upper layer containing an Rh catalyst on the lower layer. Thus, a first catalyst body was produced.

Next, the same honeycomb base material as the first base material was prepared as a second base material. Proton-type, CHA-type zeolite (H-CHA) as proton-type zeolite, a binder, and ion-exchange water were mixed to prepare a proton-type, zeolite-containing slurry. Then, the proton-type, zeolite-containing slurry was poured into the second base material as a lower layer forming slurry, and unnecessary portion of the proton-type, zeolite-containing slurry was blown away by a blower, to coat the surface of the second base material with a lower layer forming material. The resultant was then fired in an electric furnace, thereby forming the lower layer containing a proton-type zeolite on the second base material.

The Pd-containing slurry prepared above was poured, as an intermediate layer forming slurry, into the second base material on which the lower layer had been formed, and unnecessary portion of the Pd-containing slurry was blown away by a blower, thereby coating the surface of the lower layer formed on the second base material with an intermediate layer forming material. The resultant was then fired in an electric furnace, thereby forming an intermediate layer containing a Pd catalyst on the lower layer.

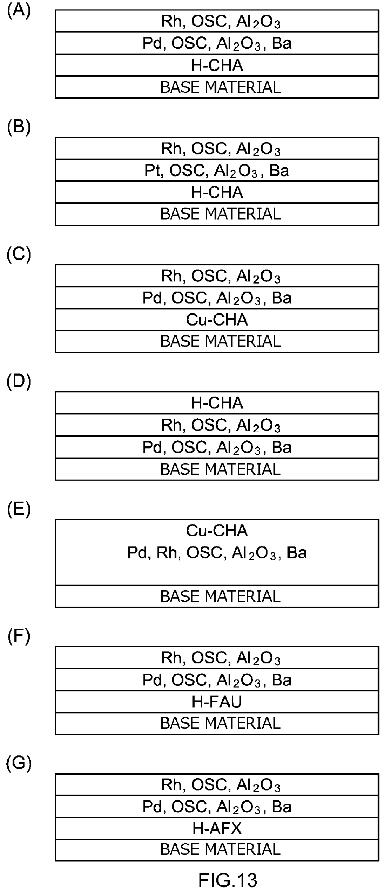

The Rh-containing slurry prepared above was poured, as an upper layer forming slurry, into the second base material on which the intermediate layer had been formed, and unnecessary portion of the Rh-containing slurry was blown away by a blower, thereby coating the surface of the intermediate layer formed on the second base material with an upper layer forming material. The resultant was then fired in an electric furnace, thereby forming the upper layer containing an Rh catalyst on the intermediate layer. Thus, a second catalyst body was produced. An exhaust gas purification system of Example 1 was constructed by combining the first catalyst body and second catalyst body produced. A layer configuration of the second catalyst body is schematically shown in Fig. 13A.

### Example 2

A first catalyst body was produced in the same manner as in Example 1. Next, platinum nitrate, a CeO₂-ZrO₂ composite oxide powder (OSC material), a Al₂O₃ powder, barium sulfate, a binder, and ion-exchange water were mixed to prepare a Pt-containing slurry. A second catalyst body was produced in the same manner as in Example 1 except that the Pt-containing slurry was used as an intermediate layer forming slurry. The Pt amount in the second catalyst body of Example 2 was the same as the Pd amount in the second catalyst body of Example 1. An exhaust gas purification system of Example 2 was constructed by combining the first catalyst body and second catalyst body produced. A layer configuration of the second catalyst body is schematically shown in Fig. 13B.

### Comparative Example 1

A first catalyst body was produced in the same manner as in Example 1. Then, Cu-carrying CHA-type zeolite (Cu-CHA), a binder, and ion-exchange water were mixed to prepare a Cu-carrying, zeolite-containing slurry. A second catalyst body was produced in the same manner as in Example 1 except that the Cu-carrying, zeolite-containing slurry was used as a lower layer forming slurry. An exhaust gas purification system of Comparative Example 1 was constructed by combining the first catalyst body and second catalyst body produced. A layer configuration of the second catalyst body is schematically shown in Fig. 13C.

### Comparative Example 2

A first catalyst body was produced in the same manner as in Example 1. A second catalyst body was produced in the same manner as in Example 1 except that the Pd-containing slurry was used as a lower layer forming slurry, the Rh-containing slurry was used as an intermediate layer forming slurry, and the proton-type, zeolite-containing slurry was used as an upper layer forming slurry. An exhaust gas purification system of Comparative Example 2 was constructed by combining the first catalyst body and second catalyst body produced. A layer configuration of the second catalyst body is schematically shown in Fig. 13D.

### Comparative Example 3

A first catalyst body was produced in the same manner as in Example 1. Next, palladium nitrate, rhodium nitrate, proton-type, CHA-type zeolite (H-CHA), a CeO₂-ZrO₂ composite oxide powder (OSC material), a Al₂O₃ powder, barium sulfate, a binder, and ion-exchange water were mixed to prepare a catalyst layer forming slurry. The catalyst layer forming slurry was poured into the second base material, and unnecessary portion of the catalyst layer forming slurry was blown away by a blower, thereby coating the surface of the second base material with a catalyst layer forming material. The resultant was then fired in an electric furnace, thereby forming the catalyst layer containing Pd and Rh catalysts and H-CHA on the second base material. Thus, a second catalyst body was produced. An exhaust gas purification system of Comparative Example 3 was constructed by combining the first catalyst body and second catalyst body produced. A layer configuration of the second catalyst body is schematically shown in Fig. 13E.

### Comparative Example 4

A first catalyst body was produced in the same manner as in Example 1. Proton-type, FAU-type zeolite (H-FAU) as proton-type zeolite, a binder, and ion-exchange water were mixed to prepare a proton-type, zeolite-containing slurry. A second catalyst body was produced in the same manner as in Example 1 except that the proton-type, zeolite-containing slurry was used as a lower layer forming slurry. An exhaust gas purification system of Comparative Example 4 was constructed by combining the first catalyst body and second catalyst body produced. A layer configuration of the second catalyst body is schematically shown in Fig. 13F.

### Example 3

A first catalyst body was produced in the same manner as in Example 1. Proton-type, AFX-type zeolite (H-AFX) as proton-type zeolite, a binder, and ion-exchange water were mixed to prepare a proton-type, zeolite-containing slurry. A second catalyst body was produced in the same manner as in Example 1 except that the proton-type, zeolite-containing slurry was used as a lower layer forming slurry. An exhaust gas purification system of Example 3 was constructed by combining the first catalyst body and second catalyst body produced. A layer configuration of the second catalyst body is schematically shown in Fig. 13G.

### [Durability Treatment]

The exhaust gas purification system of each of Examples and Comparative Examples was installed in an exhaust system of V8 gasoline engine. At this time, the first catalyst body was arranged to be located on the upstream side in the exhaust gas flow direction in the exhaust system. Exhaust gases in rich, stoichiometric, and lean atmospheres were repeatedly flowed through the exhaust gas purification system for a predetermined period of time over 50 hours at an inflow gas temperature of 950°C. Thus, the first catalyst body was subjected to a durability treatment at 1000°C, and the second catalyst body was subjected to a durability treatment at 700°C.

### [Measurement of NH₃ Emission]

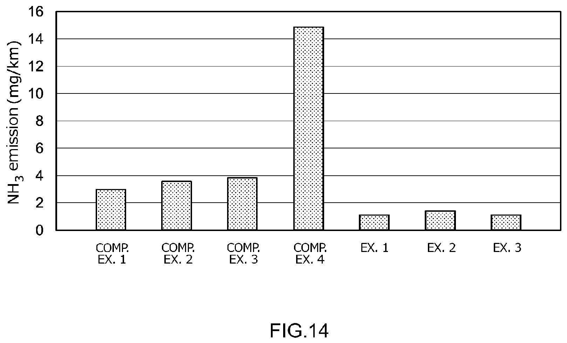

The exhaust gas purification system of each of Examples and Comparative Examples which had been subjected to the durability treatment was mounted on a vehicle including a gasoline engine. The first catalyst body was housed in a housing and mounted at a start-up catalyst position, and the second catalyst body was housed in a housing and mounted at an underfloor position. An FT-IR analyzer was mounted downstream of the second catalyst body. The vehicle was operated on a chassis dynamometer according to the WLTC mode and the ammonia concentration in the exhaust gas was measured to determine NH₃ emission. Fig. 14 shows the results.

As can be seen from the results of Fig. 14, when proton-type, CHA-type zeolite was used as zeolite of the NH₃ adsorption layer of the second catalyst body, and the NH₃ adsorption layer of the second catalyst body was located closer to the base material than the catalyst layer, the NH₃ emissions after endurance could be significantly reduced.

Specifically, in Comparative Example 1, zeolite of the NH₃ adsorption layer of the second catalyst body was changed to Cu-CHA. Comparison between Example 1 and Comparative Example 1 demonstrated that the NH₃ emission after endurance was significantly reduced by using H-CHA as an adsorbent of the NH₃ adsorption layer of the second catalyst body.

In Comparative Example 2, H-CHA was used as zeolite of the NH₃ adsorption layer of the second catalyst body, and the NH₃ adsorption layer was located on the surface part side. The comparison between Example 1 and Comparative Example 2 demonstrated that the effect of improving the NH₃ purifying performance after endurance by H-CHA was exhibited by placing the NH₃ adsorption layer closer to the base material than the catalyst layer.

In Comparative Example 3, components of the NH₃ adsorption layer and the catalyst layer in the second catalyst body were mixed to form a single layer. The comparison between Example 1 and Comparative Example 3 demonstrated that the effect of improving the NH₃ purifying performance after endurance by H-CHA was exhibited by a lamination structure in which the NH₃ adsorption layer was placed closer to the base material than the catalyst layer.

In Comparative Example 4, zeolite of the NH₃ adsorption layer of the second catalyst body was changed to H-FAU. H-FAU is a proton-type zeolite having a basic skeleton consisting of 4-, 6-, and 12 membered rings. This 12-membered ring had a diameter of 0.74 nm × 0.74 nm. In contrast, NH₃ had a molecular size of 0.26 nm, and the diameter of the 8-membered ring in the CHA-type zeolite was 0.38 nm × 0.38 nm. The comparison between Example 1 and Comparative Example 4 demonstrated that the basic skeleton of the proton-type zeolite is responsible for the improvement in NH₃ purification performance after endurance, and when the proton-type zeolite has a basic skeleton substantially consisting of 4-, 6-, and 8 membered rings, the effect of improving the purifying performance after endurance was high.

In Example 2, the catalyst noble metal of the catalyst layer of the second catalyst body was changed to Pt. The comparison between Examples 1 and 2 demonstrated that the effect of improving the NH₃ purifying performance was higher in the combination of Pd contained in the lower layer portion and Rh contained in the upper layer portion as the catalyst noble metal in the catalyst layer.

In Example 3, zeolite of the NH₃ adsorption layer of the second catalyst body was changed to H-AFX. Like H-CHA, H-AFX is also a proton-type zeolite having a basic skeleton substantially consisting of 4-, 6-, and 8 membered rings. Example 3 exhibited a high NH₃ purifying performance after endurance, comparable to the of Example 1. Thus, it was demonstrated that as long as the proton-type zeolite has a basic skeleton substantially consisting of 4-, 6-, and 8 membered rings, proton-type zeolites having various skeleton structures can be used.

As can be seen from above, according to the exhaust gas purification catalyst body for gasoline engine and the exhaust gas purification system for gasoline engine, disclosed herein, the NH₃ purifying performance after endurance is high.

While some embodiments of the present invention have been described above, the embodiments are mere examples. The present invention can be executed in various other embodiments. The present invention can be executed based on the contents disclosed herein and the technical knowledge in the present field. The technology described is the appended claims include various modifications and changes of the foregoing embodiments. For example, it is possible to replace partially the embodiments with other aspects, and it is also possible to add other variations to the embodiments. If the technical feature is not described as essential, it can be eliminated, as appropriate.

## Claims

1. An exhaust gas purification catalyst body (60) for gasoline engine (1), being configured to be placed in an exhaust path for the gasoline engine (1), the exhaust gas purification catalyst body (60) comprising:
a base material (70);
a NH₃ adsorption layer (80) containing proton-type zeolite; and
a catalyst layer (90) containing a catalyst noble metal, wherein
the NH₃ adsorption layer (80) is stacked with the catalyst layer (90) so as to be located closer to the base material (70) than the catalyst layer (90),
the proton-type zeolite has a basic skeleton substantially consisting of 4-, 6-, and 8 membered rings,
in the proton-type zeolite, all of the ion-exchangeable cationic sites are occupied by protons, and
the amount of the proton-type zeolite in the NH₃ adsorption layer is 50 mass% or more.

2. The exhaust gas purification catalyst body (60) according to claim 1, wherein
the proton-type zeolite is CHA-type zeolite or AFX-type zeolite.

3. The exhaust gas purification catalyst body (60) according to claim 1 or 2, wherein
the catalyst layer (90) contains, as the catalyst noble metal, Rh and at least one of Pd or Pt.

4. The exhaust gas purification catalyst body (60) according to any one of claims 1 to 3, wherein
the catalyst layer (90) has a multilayer structure including a first layer (94) on a surface part side and a second layer (92) on a base material layer side, and
the first layer (94) contains Rh as the catalyst noble metal, and the second layer (92) contains Pd as the catalyst noble metal.

5. An exhaust gas purification system (100, 200, 300, 400, 500, 600, 700, 800) for gasoline engine (1), being configured to be placed in an exhaust path for the gasoline engine (1), the exhaust gas purification system (100, 200, 300, 400, 500, 600, 700, 800) comprising:
an upstream catalyst converter (10) containing a first catalyst body (20, 26); and
a downstream catalyst converter (50) containing a second catalyst body (60), wherein
the first catalyst body (20, 26) contains a catalyst noble metal, and
the second catalyst body (60) is the exhaust gas purification catalyst body (60) according to any one of claims 1 to 4.

## Patentansprüche

1. Abgasreinigungskatalysatorkörper (60) für einen Benzinmotor (1), der dazu ausgebildet ist, in einem Abgasweg für den Benzinmotor (1) platziert zu werden, mit:
einem Basismaterial (70);
einer NH₃-Adsorptionsschicht (80), die Protonentypzeolith enthält; und
einer Katalysatorschicht (90), die ein Katalysatoredelmetall enthält, bei dem die NH₃-Adsorptionsschicht (80) mit der Katalysatorschicht (90) so gestapelt ist, dass sie näher an dem Basismaterial (70) liegt als die Katalysatorschicht (90),
der Protonentypzeolith ein Grundgerüst aufweist, das im Wesentlichen aus Ringen mit 4, 6 und 8 Elementen besteht,
in dem Protonentypzeolith alle ionenaustauschbaren Kationenstellen von Protonen belegt sind, und
die Menge des Protonentypzeoliths in der NH₃-Adsorptionsschicht 50 Masse% oder mehr beträgt.

2. Abgasreinigungskatalysatorkörper (60) nach Anspruch 1, bei dem
der Protonentypzeolith CHA-Typzeolith oder AFX-Typzeolith ist.

3. Abgasreinigungskatalysatorkörper (60) nach Anspruch 1 oder 2, bei dem
die Katalysatorschicht (90) als das Katalysatoredelmetall Rh und mindestens eines von Pd oder Pt enthält.

4. Abgasreinigungskatalysatorkörper (60) nach einem der Ansprüche 1 bis 3, bei dem die Katalysatorschicht (90) eine Mehrschichtstruktur mit einer ersten Schicht (94) auf einer Oberflächenteilseite und einer zweiten Schicht (92) auf einer Basismaterialschichtseite aufweist, und
die erste Schicht (94) Rh als das Katalysatoredelmetall enthält, und die zweite Schicht (92) Pd als das Katalysatoredelmetall enthält.

5. Abgasreinigungssystem (100, 200, 300, 400, 500, 600, 700, 800) für einen Benzinmotor (1), das dazu ausgebildet ist, in einem Abgasweg für den Benzinmotor (1) platziert zu werden, mit:
einem vorgelagerten Katalysator (10), der einen ersten Katalysatorkörper (20, 26) enthält, und
einem nachgelagerten Katalysator (50), der einen zweiten Katalysatorkörper (60) enthält, bei dem
der erste Katalysatorkörper (20, 26) ein Katalysatoredelmetall enthält, und
der zweite Katalysatorkörper (60) der Abgasreinigungskatalysatorkörper (60) nach einem der Ansprüche 1 bis 4 ist.

## Revendications

1. Corps de catalyseur de purification de gaz d'échappement (60) pour un moteur à essence (1), étant configuré pour être placé dans un trajet d'échappement du moteur à essence (1), le corps de catalyseur de purification de gaz d'échappement (60) comprenant :
un matériau de base (70) ;
une couche d'adsorption de NH₃ (80) contenant une zéolite de type proton ; et
une couche de catalyseur (90) contenant un catalyseur de métal noble, dans lequel la couche d'adsorption de NH₃ (80) est empilée avec la couche de catalyseur (90) de manière à être située plus près du matériau de base (70) que la couche de catalyseur (90),
la zéolite de type proton a un squelette basique constitué essentiellement d'anneaux à 4, 6 et 8 membres,
dans la zéolite de type proton, tous les sites cationiques échangeables par échange d'ions sont occupés par des protons, et
la quantité de zéolite de type proton dans la couche d'adsorption de NH₃ est de 50 % en masse ou plus.

2. Corps de catalyseur de purification de gaz d'échappement (60) selon la revendication 1, dans lequel la zéolite de type proton est une zéolite de type CHA ou une zéolite de type AFX.

3. Corps de catalyseur de purification de gaz d'échappement (60) selon la revendication 1 ou 2, dans lequel la couche de catalyseur (90) contient, en tant que catalyseur de métal noble, du Rh et au moins l'un parmi Pd ou Pt.

4. Corps de catalyseur de purification de gaz d'échappement (60) selon l'une quelconque des revendications 1 à 3, dans lequel
la couche de catalyseur (90) a une structure multicouche comprenant une première couche (94) sur un côté de la partie de surface et une deuxième couche (92) sur un côté de la couche de matériau de base, et
la première couche (94) contient du Rh comme catalyseur de métal noble, et la deuxième couche (92) contient du Pd comme catalyseur de métal noble.

5. Système de purification de gaz d'échappement (100, 200, 300, 400, 500, 600, 700, 800) pour moteur à essence (1), configuré pour être placé dans un trajet d'échappement pour le moteur à essence (1), le système de purification de gaz d'échappement (100, 200, 300, 400, 500, 600, 700, 800) comprenant :
un convertisseur catalytique amont (10) contenant un premier corps de catalyseur (20, 26) ; et
un convertisseur catalytique aval (50) contenant un deuxième corps de catalyseur (60), dans lequel
le premier corps de catalyseur (20, 26) contient un catalyseur de métal noble, et
le deuxième corps de catalyseur (60) est le corps de catalyseur de purification de gaz d'échappement (60) selon l'une quelconque des revendications 1 à 4.
